# EUROPEAN PATENT SPECIFICATION

(11) **EP 2 526 583 B1**
(45) Date of publication and mention of the grant of the patent: **19.06.2013**
(21) Application number: 11748620.9
(22) Date of filing: 12.08.2011
(51) Int. Cl.: H01M 4/62, H01M 4/88, H01M 4/139, H01M 4/60

(54) **FLEXIBLE BATTERY ELECTRODES AND THE PRODUCTION THEREOF**
FLEXIBLE BATTERIEELEKTRODEN UND IHRE HERSTELLUNG
ÉLECTRODES SOUPLES DE BATTERIES ET LEUR PRODUCTION

(30) Priority: 17.08.2010 DE 102010039416
(43) Date of publication of application: 28.11.2012
(73) Proprietor: VARTA Micro Innovation GmbH, 8010 Graz (AT)
(72) Inventor: KREN, Harald, A-8042 Graz (AT); DROISNER, Andrea, A-8113 St. Bartholomä (AT); KOLLER, Stefan, A-8010 Graz (AT)
(74) Representative: Patentanwälte Ruff, Wilhelm, Beier, Dauster & Partner
(86) International application number: PCT/EP2011/063970
(87) International publication number: WO 2012/022693

(56) References cited:
- WO-A1-2009/012899
- US-A- 3 918 989
- US-A- 4 735 875

## Description

The present invention relates to an aqueous paste for producing battery electrodes for lithium ion batteries, and also a process for producing such electrodes. The invention further relates to electrodes which can be produced from the paste or by the process and also batteries having such electrodes.

The term "battery" originally meant a plurality of electrochemical cells connected in series in a housing. However, single electrochemical cells are nowadays frequently also referred to as batteries. During the discharge of a battery, an energy-supplying chemical reaction made up to two electrically coupled but physically separate subreactions takes place. One subreaction taking place at a comparatively low redox potential proceeds at the negative electrode, while a subreaction at a comparatively higher redox potential proceeds at the positive electrode. During discharge, electrons are liberated at the negative electrode by an oxidation process, resulting in flow of electrons via an external load to the positive electrode which takes up a corresponding quantity of electrons. A reduction process thus takes place at the positive electrode. At the same time, an ion current corresponding to the electrode reaction occurs within the cell. This ion current is achieved by means of an ionically conductive electrolyte. In secondary cells and batteries, this discharge reaction is reversible, and it is thus possible to reverse the transformation of chemical energy into electric energy which occurs during discharge. If the terms anode and cathode are used in this context, the electrodes are generally named according to their discharge function. In such cells, the negative electrode is thus the anode, and the positive electrode is the cathode.

The charge which can be taken from a cell, which depends to a large degree on the discharge conditions, is referred to as capacity (unit Ah). The specific charge (unit Ah/kg) or charge density (unit Ah/l) is a measure of the number of electrons liberated or taken up per unit mass or volume and thus of the storage capacity of electrodes and batteries. A large potential difference between negative and positive electrode results, in combination with electrode materials having a high specific charge or charge density, in high values for the specific energy (unit Wh/kg) or the energy density (unit Wh/l). During operation of a battery, the speed of electron transfer and ion transfer within the battery, in particular the speed of ion transfer at phase interfaces within the electrodes, limit the power. The properties of batteries in this respect can be seen from the parameters specific power (unit W/kg) and power density (unit W/l).

Among secondary cells and batteries, lithium ion batteries achieve comparatively high energy densities. These batteries generally have composite electrodes which comprise electrochemically active components together with electrochemically inactive components. Possible electrochemically active components (often also referred to as active materials) for lithium ion batteries are in principle all materials which can take up lithium ions and release them again. Materials of this type known from the prior art for the negative electrode are, in particular, particles based on carbon, e.g. graphitic carbon or nongraphitic carbon materials capable of intercalating lithium. Furthermore, it is also possible to use metallic and semimetallic materials which can be alloyed with lithium. Thus, for example, the elements tin, antimony and silicon are able to form intermetallic phases with lithium. All electrochemically active materials are generally present in particle form in the electrodes.

As electrochemically inactive components, mention may be made first and foremost of electrode binders and current collectors. Electrons are supplied to or discharged from the electrodes via current collectors (for example an electrically conductive sheet, mesh or grid) . Electrode binders ensure mechanical stability of the electrodes and contacting of the particles of electrochemically active material with one another and with the current collectors. Conductivity-improving additives, which can likewise be subsumed under the collective term "electrochemically inactive components" can contribute to improved electrical contact of the electrochemically active particles with the current collectors. All electrochemically inactive components should, at least in the potential range of the respective electrode, be electrochemically stable and have a chemically inert character toward customary electrolyte solutions.

Active materials based on carbon make reversible specific capacities of up to 400 Ah/kg possible. However, the lithiation of such active materials is associated with a significant increase in volume. Thus, the volume of individual particles can increase by up to 10% when taking up lithium ions. This volume increase is even greater in the case of the metallic and semimetallic storage materials mentioned. Although these generally have a considerably higher storage capability than the materials based on carbon, the volumetric expansion is also significantly greater (in the first charging cycle up to 300%) on lithiation, for example of tin, antimony and silicon. When lithium ions are removed again, the volume of the respective active materials shrinks again and large stresses within the particles of active material possibly also a shift in the electrode structure occur. The associated mechanical stress on the electrodes leads, sometimes to a considerable extent, to loss of contact between adjacent particles of active material. As a result, contacted active material is available to only a reduced extent even after the first charging cycle, with corresponding adverse effects on the capacity and the life of the battery concerned.

Particularly in the case of negative electrodes which have graphitic carbon and/or, as an alternative, nongraphitic carbons capable of intercalating lithium as active material, electrode binders based on fluorinated polymers and copolymers are usually used. In this context, mention may be made by way of example of, in particular, polyvinylidene fluoride and polyvinylidene fluoride-hexafluoropropylene. Electrodes having such binders are described, for example, in EP 1 261 048 and US 5,296,318.

However, these fluorinated polymer binders are problematical from an ecological and economic point of view. They require the use of organic solvents such as N-methylpyrrolidin-2-one or acetone. The use of such process solvents requires elaborate safety and worker protection measures.

IN US-4,735,875 the use of polyethylene as electrode binder is described as well as several plasticizers including citrates. However, polyethylene binders requires the use of organic solvents, too. Proposed as organic solvent for the processing of the binder is cyclohexane.

EP 1 489 673 discloses electrodes having a binder based on styrenebutadiene rubber. Water is used as process solvent in the production of these electrodes. The pastes for producing the electrodes do not only contain active material but also an anionic polyelectrolyte selected from the group consisting of citric acid, citrates, tartaric acid, tartrates, succinic acid and succinates. In addition, the pastes contain small amounts of sodium carboxymethylcellulose.

WO 2009/012899 describes electrodes produced using at least one polysaccharide as binder. Synthetic polymer compounds do not necessarily have to be present in the electrodes described. The electrodes are preferably prepared from a water-based paste containing sodium carboxymethylcellulose and dispersed particles of metals or semimetals which can be alloyed with lithium as active material. Electrodes produced in this way display excellent cyclizing behavior. Despite the large volume expansion experienced by the abovementioned metallic and/or semimetallic storage materials during the lithiation process, the abovementioned loss of contact between adjacent particles of active material appears to occur to only a reduced extent in the case of these electrodes.

However, a problem is that carboxymethylcellulose displays comparatively brittle and relatively nonelastic behavior compared to polymeric binder materials such as the abovementioned polyvinylidene fluoride and polyvinylidene fluoride-hexafluoropropylene, which can be attributed, in particular, to the thermoset properties of carboxymethylcellulose. This behavior has a very adverse effect on the processability of the electrodes. In the production of lithium ion batteries, the electrodes are joined in multistage processes to current collectors and separators and brought into a suitable fitting shape. For this purpose, they may be rolled, pressed, subjected to lamination processes at high temperatures, wound up and cut. Electrodes having carboxymethylcellulose as binder are particularly easily damaged in such processes. In particular, they generally display very poor bonding to the current collectorsand easily flake off.

In US-3,918,989 electrodes are described containing cellulose derivatives as a binder. Further some plasticizers are mentioned which may be employed as additives during production of the electrodes, inter alia polyethylene oxides, petroleum sulfonates, phtalates, dibutyl sebacate and triethyl citrate. The electrodes are described as suitable electrodes for alkaline galvanic cells.

It was an object of the present invention to provide electrodes which display a cyclizing behavior which is ideally just as good as that of the electrodes described in WO 2009/012899 but at the same time have significantly improved processability.

This object is achieved by the paste having the features of claim 1 and also the process having the features of claim 8. Preferred embodiments of the paste of the invention are indicated in dependent claims 2 to 7. Furthermore, the electrode having the features of claim 9 and the battery having the features of claim 11 are also provided by the present invention. A preferred embodiment of the electrodes of the invention is indicated in dependent claim 10.

The present invention provides a paste which serves to produce electrodes for lithium ion batteries, in particular negative electrodes for rechargeable lithium ion batteries. It always contains particles of at least one electrochemically active material, a binder and water as solvent.

The paste according to the invention contains, in particular, at least one plasticizer. The at least one plasticizer is an aliphatic polyester (a polyester is a compound with two or more ester groups), in particular glyceryl triacetate, or a hydroxycarboxylic ester, in particular triethyl citrate (please note that triethyl citrate is a polyester, too, as it contains more than two ester groups).

Plasticizers are known, in particular, from plastics processing. They are preferably organic substances which interact physically without a chemical reaction with high polymers, preferably by means of their dissolution and swelling capabilities, and can form a homogeneous system with these high polymers. In general, plasticizers give the high polymers improved elastic properties, a reduced hardness and optionally increased adhesion.

Plasticizers, in particular plasticizers known from plastics processing, are also suitable as additives for aqueous electrode pastes. Electrodes composed of electrode pastes containing said aliphatic polyester or said hydroxycarboxylic ester as a plasticizer display significantly improved properties in respect of their processability. The above-described problems concerning the adhesion of the electrodes to electrode current collectorscan largely be ruled out, surprisingly without the addition of plasticizers having adverse effects on the electrochemical properties of the electrode.

As is known, triethyl citrate is formed by esterification of ethanol with citric acid. This ester is a colorless liquid which boils at 294°C under atmospheric pressure. Triethyl citrate is miscible with ethanol and diethyl ether, but has poor solubility in water.

Glyceryl triacetate (often also referred to as glycerol triacetate or triacetin) is an ester compound which is derived from glycerol and acetic acid and is liquid at room temperature. It dissolves in alcohols and ethers and also has a low solubility in water. Its boiling point is 258°C.

The plasticizers mentioned can be present individually or in combination in the paste of the invention.

The plasticizer present in the paste of the invention preferably has a boiling point in the range from 120°C to 350°C. Within this range, further preference is given to a boiling point in the range from 150°C to 330°C, in particular from 200°C to 300°C.

Temperatures in these ranges are frequently attained in the processing of electrodes, for example in drying steps. The plasticizer can thus be removed in a targeted way in the processing of the electrodes. This may be very advantageous. The presence of the plasticizer offers greater advantages in the processing of the electrodes. However, in the resulting electrode, the plasticizer is "dead material" from an electrochemical point of view, i.e. an electrochemically inactive component in the sense of what has been said above which decreases the energy density of the electrode. The at least partial removal of the plasticizer during the processing of the electrodes can be a thoroughly desirable measure.

The plasticizer present in the paste of the invention has a molar mass in the range from 150 to 500 g/mol, in particular from 150 to 300 g/mol. In a preferred embodiment, the plasticizer preferably comprises or consists of an organic compound of the elements carbon (C), hydrogen (H) and oxygen (O). In a further preferred embodiment, the plasticizer has from 5 to 25, preferably from 7 to 12, carbon atoms.

In a preferred embodiment the plasticizer is an aliphatic polyester
- having a chemical formula with 7 to 12 carbon atoms,
- consisting of the elements carbon (C), hydrogen (H) and oxygen (O),
- having a molar mass in the range from 150 to 300 g/mol and
- a boiling point between 200 °C and 300 °C.

In a preferred embodiment the aliphatic polyester has as functional groups only ester groups. In other embodiments the aliphatic polyester may have 1 to 3 OH-groups (hydroxy-groups), in particular 1 OH-group. Preferably the plasticizer does not have any other functional groups than said ester- and hydroxy-groups.

The plasticizers used according to the invention are generally nonionic compounds. In neutral aqueous solutions they are generally present in undissociated form.

The binder in a paste according to the invention is preferably a binder which can be processed in water. Preference is given to a binder based on a polysaccharide.

Polysaccharides suitable as binders are comprehensively described in WO 2009/012899. The relevant information given in WO 2009/012899 is hereby incorporated by reference into the present description.

Particular preference is given to using carboxymethylcellulose as polysaccharide-based electrode binder for the purposes of the present invention. Carboxymethylcelluloses are known derivatives of cellulose, in which at least part of the OH groups of the cellulose are bound as ether to a carboxymethyl group. To prepare carboxymethylcellulose, cellulose is generally converted in a first step into reactive alkali metal cellulose and subsequently reacted with chloroacetic acid to form carboxymethylcellulose. The cellulose structure is retained in this procedure. Particularly under alkaline conditions, carboxyalkylcelluloses are generally relatively readily soluble in water.

Particular preference is given to using sodium carboxymethylcellulose, in particular with a degree of substitution of from 0.5 to 3, particularly preferably from 0.8 to 1.6, as binder in a paste according to the invention. The degree of substitution indicates the average number of modified hydroxyl groups per monosaccharide unit in a cellulose derivative. Since in cellulose, three hydroxy groups per monosaccharide unit are available for a reaction, the maximum achievable degree of substitution in the present case is 3.

As mentioned above, a paste according to the invention necessarily contains water as solvent. It can optionally additionally have a proportion of at least one further, preferably organic, solvent (e.g. an alcohol), but preferably contains exclusively water as solvent. This is preferably present in the paste of the invention in a proportion in the range from 50% by weight to 90% by weight. The solids content of a paste according to the invention is accordingly preferably in the range from 10% by weight to 50% by weight.

In preferred embodiments, a paste according to the invention can contain a solubilizing or dissolution-promoting additive to increase the solubility of the at least one plasticizer in the paste solvent. As indicated above, there are plasticizers which have only a low solubility in water. To distribute such plasticizers very homogeneously in the paste of the invention, the abovementioned additive can be added. For example, an alcohol or a surfactant can be added as suitable additive to the paste.

The particles of the at least one electrochemically active material which are present in the paste of the invention can be, in particular, the abovementioned metallic and/or semimetallic particles which can form an alloy with lithium. The metal and/or semimetal is in this case, in particular, aluminum, silicon, antimony, tin, cobalt or a mixture thereof. A tin/antimony or tin-cobalt mixture is particularly preferred as mixture. As an alternative, the particles can also be particles which intercalate lithium ions, e.g. particles of graphitic carbon. In preferred embodiments, it is also possible to use a combination of the abovementioned metallic and/or semimetallic particles with the abovementioned carbon-based particles which intercalate lithium ions. The mixing ratio of the particles of the carbon-based material which intercalates lithium ions to the metallic and/or semimetallic particles is in these cases particularly preferably in the range from 1:1 to 9:1 (based on the weights used). Particular preference is given to mixtures of graphitic carbon particles and silicon particles.

The particles of the carbon-based material which intercalates lithium ions preferably have an average particle size in the range from 1 µm to 50 µm, in particular from 4 µm to 30 µm. Further preference is given to the particles of the metal and/or semimetal having an average particle size of less than 1 µm.

The metallic and semimetallic particles can have OH groups (hydroxyl groups) on their surface when the surface is at least partially oxidized. This can be the case when, in particular, the particles have been brought into contact with water. For example, a paste according to the invention can be produced by introducing particles of silicon as electrochemically active material together with a polysaccharide as binder into water or an aqueous solution as solvent. A strong, covalent bond to the polysaccharide-based electrode binder can be formed via these OH groups, in particular by means of a condensation reaction with elimination of water. The covalent bond between the particles and the matrix results in a particularly strong and resistant electrode structure which can very readily withstand the internal mechanical stresses in the electrodes during charging and discharging processes.

Apart from the abovementioned components, the paste of the invention can also have further constituents. In this context, conductivity improvers such as carbon black or metal particles warrant particular mention. Furthermore, additives to modify the processing properties of the paste of the invention can also be present, for example rheological auxiliaries by means of which the viscosity of the paste of the invention can be adapted.

In particularly preferred embodiments, a paste according to the invention contains
- from 40% by weight to 98% by weight of particles of the at least one electrochemically active material,
- from 0.5% by weight to 30% by weight of the binder,
- from 0.1 % by weight to 30% by weight of the at least one plasticizer and
- from 0.1% by weight to 30% by weight of at least one conductivity improver,
wherein these proportions add up to 100% by weight, and in addition to these components
- a 0.5-fold to 9-fold amount (weight amount) of the solvent.

The process of the invention serves to produce electrodes, in particular for lithium ion batteries, using a paste according to the invention as described above. This paste is generally applied to a current collector, in for example to a sheet-like current collector in a first step, for example in a rolling or doctor blade process. Customary electrode current collectors consist usually of metal, in particular (in the case of the negative electrode) of copper. In general, they are configured as mentioned in the introductory part of this application. The paste is usually applied in a thin layer (the electrode layer) to the current collector and subsequently subjected to heat treatment. This serves, in particular, to remove the solvent which is present in the layer and can be virtually completely removed in this drying step. As mentioned above, the solvent is particularly preferably water.

Alternatively it is possible to prepare a thin film layer from the paste and combine this layer - before or after the heat treatment - with the current collector, for example in a lamination step.

The heat treatment is preferably carried out at temperatures in the range from 40°C to 95°C, in particular at about 60°C. Depending on the duration of the heat treatment, at least a major part of the water present in the layer can be removed at these temperatures.

To improve the electrochemical properties of the electrode layer applied to the current collector, the electrode layer is contacted under pressure with the sheet-like power lead in a subsequent step. This can be effected, for example, in a rolling, pressing or calendering step. This pressure treatment brings about optimum contacting of the particles of active material present in the layer with one another and with the electrode power lead. In this step in particular, the plasticizer present in the paste of the invention ensures improved processability, so that flaking-off of the electrode layer from the electrode power lead does not occur.

Residual solvent remaining in the electrode layer can subsequently be removed in a further heat treatment. This drying step is preferably carried out at temperatures in the range from 80°C to 350°C, preferably from 80 °C to 250°C, more preferably from 80°C to 160°C and optionally under reduced pressure. Under these conditions, plasticizer present in the electrode layer can be at least partly removed, possibly completely removed. The advantages associated therewith have been discussed above.

Vaporization of the plasticizer in the heat treatment forms a porous electrode structure. Electrolyte can penetrate into the resulting pores and the electrode can thus be electrically contacted over its area via the pores. Nonaqueous pastes containing dibutyl phthalate are classically used for producing porous electrode structures, as described, for example, in the abovementioned EP 1 261 048. The dibutyl phthalate can be leached from the electrodes produced therewith using organic solvents. This step can be dispensed with when using pastes according to the present invention.

The electrodes produced from a paste according to the invention or by a process according to the invention are likewise provided by the present invention. In agreement with what has been said above, they are particularly suitable as electrodes for lithium ion batteries.

Electrodes according to the invention comprise a matrix composed of a binder, particles of at least one electrochemically active material which are embedded in the matrix and also at least one of said aliphatic polyester and hydroxycarboxylic ester as plasticizer.

The nature of the binder and also the nature of the particles of the at least one electrochemically active material and of the plasticizer have been discussed above. The corresponding information is incorporated by reference at the present point.

The binder matrix of an electrode according to the invention forms a three-dimensional structure within which the electrochemically active particles are preferably homogeneously distributed. The term "matrix" here refers simply to a material in which particles of one or more further materials are embedded.

The electrode of the invention is optionally impregnated with an electrolyte. In the case of lithium ion batteries, this is usually a carbonate-based organic electrolyte containing a suitable electrolyte salt, e.g. lithium hexafluorophosphate.

The proportion of electrochemically active materials in an electrode according to the invention is, based on the solids in the electrode, in the range from 40 to 98% by weight. The proportion of electrochemically inactive materials is accordingly in the range from 2% to 60%.

An electrode according to the invention is, in particular, configured as a flat layer which is preferably arranged on an electrode current collector. Appropriate electrode current collectors like sheet-like current collectors can, of course, also be coated on both sides with electrode layers.

In a battery according to the invention which comprises at least one electrode according to the invention, the electrode is preferably present as a winding (in particular as constituent of an electrode-separator winding) or flat in an electrode-separator stack. The battery according to the invention is preferably a lithium ion battery, in particular a battery having at least one electrode having a water-soluble binder system and at least one of the abovementioned plasticizers.

Further features of the invention can be derived from the following description of preferred embodiments in conjunction with the dependent claims. Here, individual features can be realized on their own or as a plurality thereof in combination with one another in an embodiment of the invention. The preferred embodiments described are merely for the purposes of illustration and to give a better understanding of the invention and do not in any way constitute a restriction.

### Description of figures

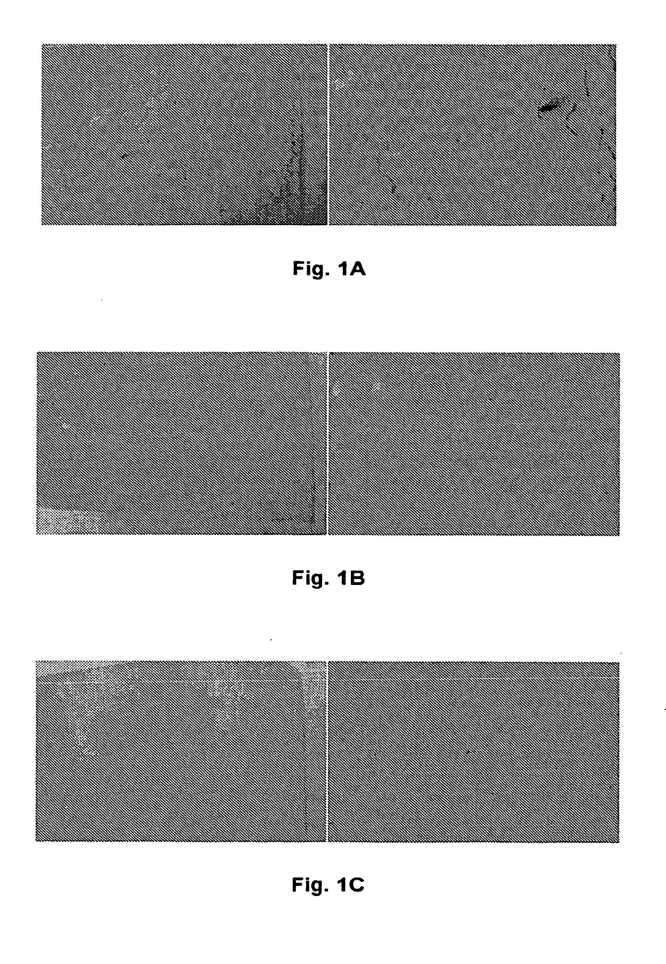

**Fig. 1A** is a photo of a negative electrode produced according to the prior art for a lithium ion battery without a plasticizer according to the present invention. The electrode is arranged as a thin layer on a copper foil which serves as current collector. The electrode was produced from a paste composed of 10% by weight of sodium carboxymethylcellulose, 10% by weight of a conductivity additive (a mixture of conductive carbon black and carbon nanofibers) and 80% by weight of silicon (average particle size 30 - 50 nm) as electrochemically active material. Water was used as process solvent (3 g of water per 0.5 g of electrode material). It can clearly be seen that the electrode flakes off from the copper current collector at many places.
**Fig. 1** **B** is a photo of a negative electrode according to the invention for a lithium ion battery on a current collector composed of a copper foil. To produce this electrode, an aqueous paste containing sodium carboxymethylcellulose as binder, conductive carbon black and carbon nanofibers as conductivity additive and silicon as electrochemically active material in a weight ratio of 1:1:8 was likewise used. The ratio of water to solid electrode materials in the paste was about 6:1. In addition, a defined amount of triethyl citrate as plasticizer was added to the paste (20% based on the dry mass of electrode material). The result is clearly visible. The resulting electrode flakes off from the copper current collector to a significantly lesser extent.
**Fig. 1C** is a photo of a further negative electrode according to the invention for a lithium ion battery. This was produced in a manner analogous to the electrode shown in Fig. 1B. However, the proportion of triethyl citrate in the paste was doubled (40% based on the dry mass of the electrode material). The adhesion of the resulting electrode to the copper current collector is improved again compared to the electrode shown in Fig. 1B.

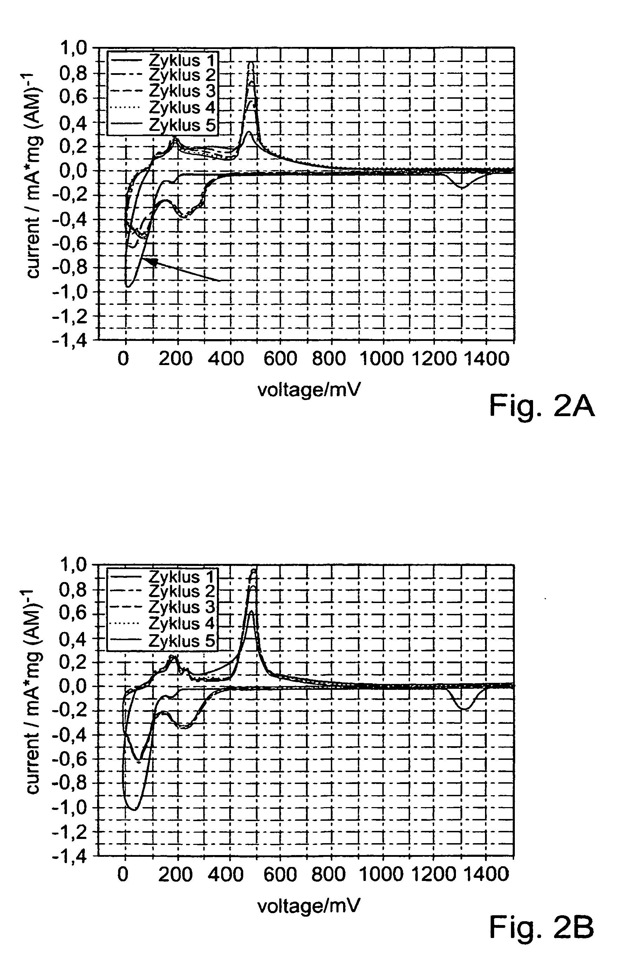

**Fig. 2A** shows the cyclovoltamogram of a negative electrode without plasticizer produced according to the prior art. The electrode was produced from a paste containing 8% by weight of sodium carboxymethylcellulose as binder, 10% by weight of a conductivity additive (conductive carbon black and carbon nanofibers), 20% by weight of silicon (average particle size 30 - 50 nm) and 62% of graphite as electrochemically active material. The ratio of water to dry electrode materials in the paste was 4:1. The paste was applied as a thin layer to a copper current collector by means of a doctor blade and calendered after drying. Compared to the dry doctor-blade thickness, the shrinkage during calendering was 15%. The advance rate selected for the cyclovoltamogram was 30 µV/s.
**Fig. 2B** shows the cyclovoltamogram of a negative electrode according to the invention. The electrode was produced from an aqueous paste containing 8% by weight of sodium carboxymethylcellulose as binder, 10% by weight of a conductivity additive (a mixture of conductive carbon black and carbon nanofibers), 20% by weight of silicon (average particle size 30 - 50 nm) and 62% of graphite as electrochemically active material. The ratio of water to dry electrode materials in the paste was about 4:1. 0.1 g of triethyl citrate was added (10% based on the dry mass of electrode material). The paste was processed to form an electrode using the same parameters as the reference in Fig. 2A.
Compared to the dry doctor-blade thickness, the shrinkage during calendering was 15%. The advance rate selected for the cyclovoltamogram was 30 µV/s.

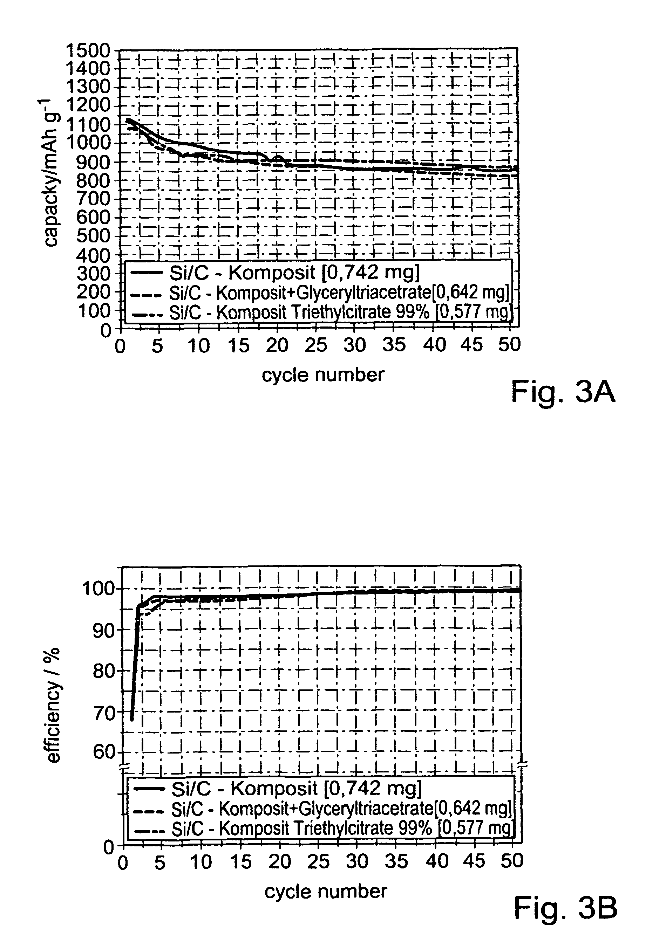

**Fig. 3A** and **Fig. 3B** compare the discharge capacities of an electrode produced according to the prior art and two electrodes according to the invention with plasticizer (glyceryl triacetate in one case and triethyl citrate in the other) in the first 50 charging/discharging cycles and also the charging and discharging efficiencies of the electrodes during cyclizing. The electrodes were in each case produced from an aqueous paste containing 8% by weight of sodium carboxymethylcellulose as binder, 10% by weight of a conductivity additive (a mixture of conductive carbon black and carbon nanofibers), 20% by weight of silicon (average particle size 30 - 50 nm) and 62% of graphite as electrochemically active material. The ratio of water to dry electrode materials in the paste was about 4:1. To produce the electrodes according to the invention, 0.1 g of triethyl citrate or 0.1 g of glyceryl triacetate (in each case 10% based on the dry mass of electrode material) was added as plasticizer to the pastes. The other production parameters were the same for all electrodes. The comparison shows that the electrochemical properties of the electrodes in respect of charging/discharging capacities are not adversely affected by the addition of plasticizer.

## Claims

1. A paste for producing electrodes for lithium ion batteries, containing as electrochemically active material particles of a metal/semimetal selected from the group of silicon, aluminium, antimony, tin and cobalt and/or carbon-based particles which intercalate lithium, a binder based on a polysaccharide, water as solvent and an aliphatic polyester having a molar mass in the range from 150 to 500 g/mol or an hydroxycarboxylic ester having a molar mass in the range from 150 to 500 g/mol as plasticizer.

2. The paste as claimed in claim 1, **characterized in that** the plasticizer has a boiling point in the range from 120°C to 350°C, preferably from 200°C to 300°C.

3. The paste as claimed in one of the preceding claims, **characterized in that** the plasticizer is an aliphatic polyester or comprises an aliphatic polyester
- having 7 to 12 carbon atoms,
- consisting of the elements carbon (C), hydrogen (H) and oxygen (O),
- having a molar mass in the range from 150 to 300 g/mol and
- a boiling point between 200 °C and 300 °C.

4. The paste as claimed in one of the preceding claims, **characterized in that** the plasticizer is a hydroxycarboxylic ester or comprises a hydroxycarboxylic ester
- having 7 to 12 carbon atoms,
- consisting of the elements carbon (C), hydrogen (H) and oxygen (O),
- having a molar mass in the range from 150 to 300 g/mol and
- a boiling point between 200 °C and 300 °C.

5. The paste as claimed in one of the preceding claims, **characterized in that** the at least one plasticizer is glyceryl triacetate, and/or triethyl citrate.

6. The paste as claimed in any of the preceding claims, **characterized in that** the binder is carboxymethylcellulose (CMC), in particular sodium carboxymethylcellulose.

7. The paste as claimed in any of the preceding claims, **characterized in that** it contains a solubilizing or dissolution-promoting additive to increase the solubility of the plasticizer in the solvent.

8. A process for producing electrodes for lithium ion batteries, which process comprises the steps
- application of a paste as claimed in any of the preceding claims to a current collector to form an electrode layer on the power lead,
- heat treatment with at least partial removal of solvent present in the layer,
- pressing or calendering of the electrode layer on the sheet-like current collector and
- optionally a second heat treatment with removal of residual solvent from the layer.

9. An electrode comprising a matrix composed of a binder based on a polysaccharide, particles of a metal/semimetal selected from the group of silicon, aluminium, antimony, tin and cobalt and/or carbon-based particles which intercalate lithium which are embedded in the matrix and an aliphatic polyester having a molar mass in the range from 150 to 500 g/mol or an hydroxycarboxylic ester having a molar mass in the range from 150 to 500 g/mol as plasticizer.

10. The electrode as claimed in claim 9, **characterized in that** it is a flat layer, in particular on a current collector.

11. Lithium ion battery, comprising an electrode as claimed in any of claims 9 or 10.

## Patentansprüche

1. Paste zur Herstellung von Elektroden für Lithium-Ionen-Batterien, die als elektrochemisch aktives Material Partikel aus einem Metall/Halbmetall, das ausgewählt ist aus der Gruppe aus Silicium, Aluminium, Antimon, Zinn und Cobalt und/oder Partikel auf Kohlenstoffbasis, welche Lithium interkalieren, einen Binder auf Basis eines Polysaccharids, Wasser als Lösungsmittel sowie einen aliphatischen Polyester mit einer Molmasse im Bereich von 150 bis 500 g/mol oder einen Hydroxycarbonsäureester mit einer Molmasse im Bereich von 150 bis 500 g/mol als Weichmacher enthält.

2. Paste nach Anspruch 1, **dadurch gekennzeichnet, dass** der Weichmacher einen Siedepunkt im Bereich von 120 °C bis 350 °C, bevorzugt von 200 °C bis 300 °C, aufweist.

3. Paste nach einem der vorhergehenden Ansprüche, **dadurch gekennzeichnet, dass** der Weichmacher ein aliphatischer Polyester ist oder einen aliphatischen Polyester umfasst
- mit 7 bis 12 Kohlenstoffatomen,
- der aus den Elementen Kohlenstoff (C), Wasserstoff (H) und Sauerstoff (O) gebildet ist,
- der eine Molmasse im Bereich von 150 bis 300 g/mol und
- einen Siedepunkt zwischen 200 °C und 300 °C aufweist.

4. Paste nach einem der vorhergehenden Ansprüche, **dadurch gekennzeichnet, dass** der Weichmacher ein Hydroxycarbonsäureester ist oder einen Hydroxycarbonsäureester umfasst
- mit 7 bis 12 Kohlenstoffatomen,
- der aus den Elementen Kohlenstoff (C), Wasserstoff (H) und Sauerstoff (O) gebildet ist,
- der eine Molmasse im Bereich von 150 bis 300 g/mol und
- einen Siedepunkt zwischen 200 °C und 300 °C aufweist.

5. Paste nach einem der vorhergehenden Ansprüche, **dadurch gekennzeichnet, dass** der mindestens eine Weichmacher Glyceryltriacetat und/oder Triethylcitrat ist.

6. Paste nach einem der vorhergehenden Ansprüche, **dadurch gekennzeichnet, dass** der Binder Carboxymethylcellulose (CMC), insbesondere Natrium-Carboxymethylcellulose, ist.

7. Paste nach einem der vorhergehenden Ansprüche, **dadurch gekennzeichnet, dass** sie ein lösungsvermittelndes oder lösungsverstärkendes Additiv zur Erhöhung der Löslichkeit des Weichmachers in dem Lösungsmittel enthält.

8. Verfahren zur Herstellung von Elektroden für Lithium-lonen-Batterien, wobei das Verfahren die Schritte umfasst:
- Aufbringen einer Paste nach einem der vorhergehenden Ansprüche auf einen Stromableiter unter Ausbildung einer Elektrodenschicht auf dem Ableiter,
- Wärmebehandlung unter zumindest teilweiser Entfernung von in der Schicht enthaltenem Lösungsmittel,
- Pressen oder Kalandrieren der Elektrodenschicht auf den flächigen Stromableiter und
- gegebenenfalls eine zweite Wärmebehandlung unter Entfernung von Restlösungsmittel aus der Schicht.

9. Elektrode umfassend eine Matrix gebildet aus einem Binder auf Basis eines Polysaccharids, Partikeln aus einem Metall/Halbmetall, das ausgewählt ist aus der Gruppe von Silicium, Aluminium, Antimon, Zinn und Cobalt und/oder Partikeln auf Kohlenstoffbasis, in die Lithium interkaliert ist, die in eine Matrix eingebettet sind, sowie einen aliphatischen Polyester mit einer Molmasse im Bereich von 150 bis 500 g/mol oder einen Hydroxycarbonsäureester mit einer Molmasse im Bereich von 150 bis 500 g/mol als Weichmacher.

10. Elektrode nach Anspruch 9, **dadurch gekennzeichnet, dass** sie als flache Schicht ausgebildet ist, insbesondere auf einem Stromableiter.

11. Lithium-Ionen-Batterie, umfassend eine Elektrode nach einem der Ansprüche 9 oder 10.

## Revendications

1. Pâte pour fabriquer des électrodes pour batteries lithium-ion, contenant comme matériau électrochimiquement actif des particules d'un métal/semi-métal choisi dans le groupe constitué par le silicium, l'aluminium, l'antimoine, l'étain et le cobalt et/ou des particules à base de carbone qui intercalent du lithium, un liant basé sur un polysaccharide, de l'eau comme solvant et un polyester aliphatique ayant une masse molaire dans la gamme de 150 à 500 g/mol ou un ester hydroxycarboxylique ayant une masse molaire dans la gamme de 150 à 500 g/mol comme plastifiant.

2. Pâte selon la revendication 1, **caractérisée en ce que** le plastifiant a un point d'ébullition dans la gamme de 120 °C à 350 °C, de préférence de 200 °C à 300 °C.

3. Pâte selon l'une des revendications précédentes, **caractérisée en ce que** le plastifiant est un polyester aliphatique ou comprend un polyester aliphatique
- portant 7 à 12 atomes de carbone,
- composé des éléments carbone (C), hydrogène (H) et oxygène (O),
- ayant une masse molaire dans la gamme de 150 à 300 g/mol et
- un point d'ébullition entre 200 °C et 300 °C.

4. Pâte selon l'une des revendications précédentes, **caractérisée en ce que** le plastifiant est un ester hydroxycarboxylique ou comprend un ester hydroxycarboxylique
- portant 7 à 12 atomes de carbone,
- composé des éléments carbone (C), hydrogène (H) et oxygène (O),
- ayant une masse molaire dans la gamme de 150 à 300 g/mol et
- un point d'ébullition entre 200 °C et 300 °C.

5. Pâte selon l'une des revendications précédentes, **caractérisée en ce que** l'au moins un plastifiant est le triacétate de glycéryle et/ou le citrate de triéthyle.

6. Pâte selon l'une quelconque des revendications précédentes, **caractérisée en ce que** le liant est la carboxyméthylcellulose (CMC), en particulier la carboxyméthylcellulose sodique.

7. Pâte selon l'une quelconque des revendications précédentes, **caractérisée en ce qu'**elle contient un additif solubilisant ou favorisant la dissolution pour augmenter la solubilité du plastifiant dans le solvant.

8. Procédé de fabrication d'électrodes pour batteries lithium-ion, lequel procédé comprend les étapes suivantes :
- application d'une pâte selon l'une quelconque des revendications précédentes à un collecteur de courant pour former une couche d'électrode sur le conducteur d'alimentation,
- traitement thermique avec retrait au moins partiel du solvant présent dans la couche,
- compression ou calandrage de la couche d'électrode sur le collecteur de courant en forme de feuille, et
- éventuellement, deuxième traitement thermique avec retrait du solvant résiduel de la couche.

9. Électrode comprenant une matrice composée d'un liant basé sur un polysaccharide, des particules d'un métal/semi-métal choisi dans le groupe constitué par le silicium, l'aluminium, l'antimoine, l'étain et le cobalt et/ou des particules à base de carbone qui intercalent du lithium qui sont incorporées dans la matrice, et un polyester aliphatique ayant une masse molaire dans la gamme de 150 à 500 g/mol ou un ester hydroxycarboxylique ayant une masse molaire dans la gamme de 150 à 500 g/mol comme plastifiant.

10. Électrode selon la revendication 9, **caractérisée en ce qu'**il s'agit d'une couche plate, en particulier sur un collecteur de courant.

11. Batterie lithium-ion comprenant une électrode selon l'une quelconque des revendications 9 et 10.
